# EUROPEAN PATENT APPLICATION

(11) **EP 4 644 849 A1**
(43) Date of publication of application: **05.11.2025**
(21) Application number: 25173467.9
(22) Date of filing: 30.04.2025
(51) Int. Cl.: G01J 1/42, G01J 5/12

(54) **HIGH-POWERED LASER CHARACTERIZATION USING A THERMOPILE ARRAY**

(30) Priority: 01.05.2024 US 202418652522
(71) Applicant: The Boeing Company, Arlington, VA 22202 (US)
(72) Inventor: HAMBURG, Dalton Wyllie, ARLINGTON, 22202 (US); JOHNSON, Matthew Carl, ARLINGTON, 22202 (US); CHAPMAN, Eric, ARLINGTON, 22202 (US)
(74) Representative: Plasseraud IP

(57) **Abstract**

An approach for characterizing laser light (102) emitted from a high-powered laser (100) is disclosed. In one example, the approach is employed by a tool (200) that includes an array of thermopiles (104) and a computing system (202). The array of thermopiles (104) is configured to receive laser light (102) emitted from the high-powered laser (100). Each thermopile has a fixed spatial location relative to each other thermopile within the array of thermopiles (104). Each thermopile is configured to output an energy flux value (208) of the laser light (102) incident on the thermopile. The computing system (202) is configured to receive a set of energy flux values (208) from the array of thermopiles (104) based at least on the laser light (102) emitted by the high-powered laser (100) being incident on the array of thermopiles (104) and output a characterization (210) of the laser light (102) emitted by the high-powered laser (100) based at least on the set energy flux values (208) received from the array of thermopiles (104).

## Description

### FIELD

The present disclosure relates to high-powered lasers and, more specifically, to approaches for measuring characteristics of laser light emitted by a high-powered laser.

### BACKGROUND

A high-powered laser refers to a laser that emits a substantially large amount of photon energy per unit time, typically in the range of kilowatts (kW), megawatts (MW), or higher. In order to control a high-powered laser in an accurate manner, it is important to assess the beam quality of the high-powered laser accurately. However, it can be challenging to accurately assess the beam quality of a high-powered laser, because the beam emitted by the high-powered laser can be too powerful for conventional beam profilers to assess without becoming damaged.

### SUMMARY

According to a first aspect, a tool for characterizing laser light emitted by a high-powered laser as defined in pending claims is provided.

According to a second aspect, a computer-implemented method for characterizing laser light emitted from a high-powered laser as defined in pending claims is provided.

In one example, the approach is employed by a tool that includes an array of thermopiles and a computing system. The array of thermopiles is configured to receive laser light emitted from the high-powered laser. Each thermopile has a fixed spatial location relative to each other thermopile within the array of thermopiles. Each thermopile is configured to output an energy flux value of the laser light incident on the thermopile. The computing system is configured to receive a set of energy flux values from the array of thermopiles based at least on the laser light emitted by the high-powered laser being incident on the array of thermopiles and output a characterization of the laser light emitted by the high-powered laser based at least on the set energy flux values received from the array of thermopiles.

The features and functions that have been discussed can be achieved independently in various embodiments or may be combined in yet other embodiments, further details of which can be seen with reference to the following description and drawings.

### BRIEF DESCRIPTION OF THE DRAWINGS

FIG. 1 shows an example high-powered laser emitting laser light incident on an array of thermopiles of an example tool of the present disclosure.
FIG. 2 schematically shows an example tool for characterizing laser light emitted by a high-powered laser.
FIG. 3 shows an example energy flux distribution plot spatially registered to an array of thermopiles at a first position.
FIG. 4 shows the example energy flux distribution plot of FIG. 3 spatially registered to the array of thermopiles at a second position shifted to the right relative to the first position.
FIG. 5 shows the example energy flux distribution plot of FIG. 3 spatially registered to the array of thermopiles at a third position shifted to the left relative to the first position.
FIGS. 6-8 show example optical configurations that may be employed in the tool of FIG. 2.
FIGS. 9A-9B show an example computer-implemented method for characterizing laser light emitted from a high-powered laser.
FIG. 10 shows an example computing system.

### DETAILED DESCRIPTION

Determining characteristics of laser light emitted by a high-powered laser (typically in the range of kilowatts (kW), megawatts (MW), or higher) is critical to the operational effectiveness of the high-powered laser, since different applications require the laser light emitted by the high-powered laser to have particular characteristics that are specific to the application. For example, measurement of an energy flux distribution of the laser light can be used to assess beam quality. Further, multiple measurements of energy flux distributions of the laser light from different known positions can be used to determine a position and size of a waist of a laser beam emitted by the high-powered laser. Such measured characteristics of the laser light can be used to determine whether the high-powered laser is being properly aimed at a target. Further, such characterization of the laser light of the high-powered laser would enable the high-powered laser to be certified as functioning properly or calibrated as needed.

Currently, there is no way to accurately determine characteristics of laser light emitted by a high-powered laser using conventional beam profiling techniques. Conventional beam profilers do not have a high enough damage tolerance to withstand the photon energy per unit time of a high-powered laser without degradation or failure. Moreover, such a conventional beam profiler is unable to withstand repeated exposure to laser light emitted from a high-powered laser, which would be required to repeatedly determine characteristics of the laser light emitted by the high-powered laser across the operational lifespan of the high-powered laser, such as for certification and/or calibration of the high-powered laser. Moreover, conventional beam profilers do not have methods for their own calibration. Without the ability to calibrate the beam profiler, it is difficult to determine whether the laser or the beam profiler condition has changed.

Accordingly, the present disclosure is directed to an approach for characterizing laser light emitted from a high-powered laser. In one example, an array of thermopiles is employed by a tool to characterize the laser light. Each thermopile is configured to receive laser light emitted from the high-powered laser and output an energy flux value of the laser light incident on the thermopile. Each thermopile comprises materials that are configured to withstand the substantial photon energy per unit time of the high-powered laser (e.g., different metals, coatings) without degradation. Each thermopile has a fixed spatial location relative to each other thermopile within the array of thermopiles. This arrangement allows for each thermopile to act as a "pixel" to detect an energy flux value of laser light incident on the thermopile. Collectively, the array of thermopiles can detect an energy flux distribution of the laser light incident on the array, among other characteristics of the laser light.

Furthermore, the tool comprises a computing system configured to process the output of the array of thermopiles. In particular, the computing system is configured to receive a set of energy flux values from the array of thermopiles based at least on the laser light incident on the array of thermopiles. The computing system is configured to output a characterization of the laser light emitted by the high-powered laser based at least on the set energy flux values received from the array of thermopiles.

By employing the array of thermopiles to characterize laser light emitted by a high-powered laser, the thermopiles have a suitably high enough damage tolerance to withstand incident laser light without degradation while still providing accurate characterization of the laser light. In contrast, other conventional devices, such as beam profilers or other optical sensor-based devices, would suffer degradation from incident laser light from the high-powered laser and would be unable to provide such a characterization of the laser light consistently over time, which leads to questions about whether the laser or the beam profiler is changing. In contrast to conventional beam profilers, thermopiles can be calibrated, and thus the array of thermopiles can be calibrated so that a laser can be characterized consistently over time.

Furthermore, by employing an entire array of thermopiles that have a fixed spatial location relative to one another within the array, the array of thermopiles can collectively provide a spatial characterization of the laser light, such as an energy flux distribution across a laser beam incident on the array of thermopiles. Conventional beam profilers or similar devices are incapable of providing such a spatial characterization of the laser light emitted from a high-powered laser.

In some embodiments, the characterization of the laser light output by the array of thermopiles may be utilized to provide certification and/or calibration functionality for the high-powered laser. Such certification and/or calibration of a higher-powered laser according to the disclosed approach may be more accurate than conventional approaches.

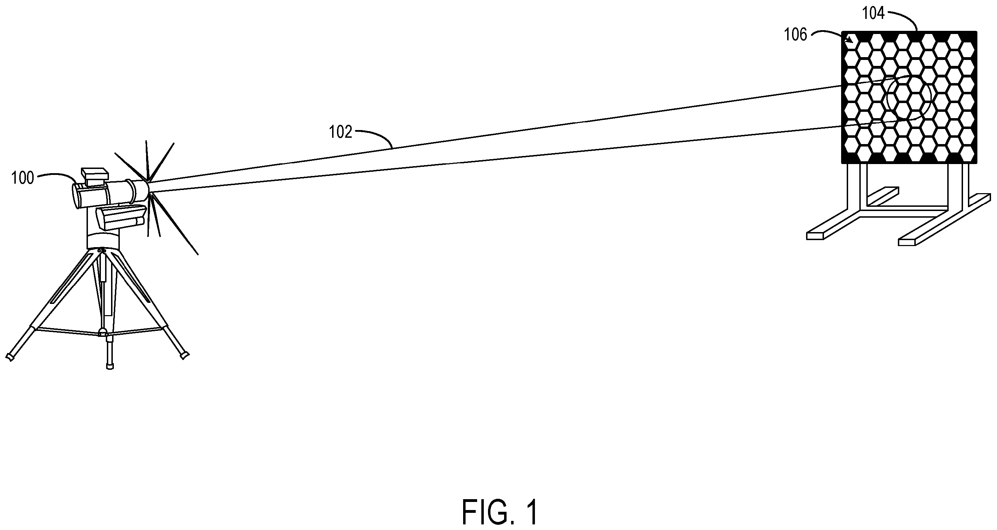

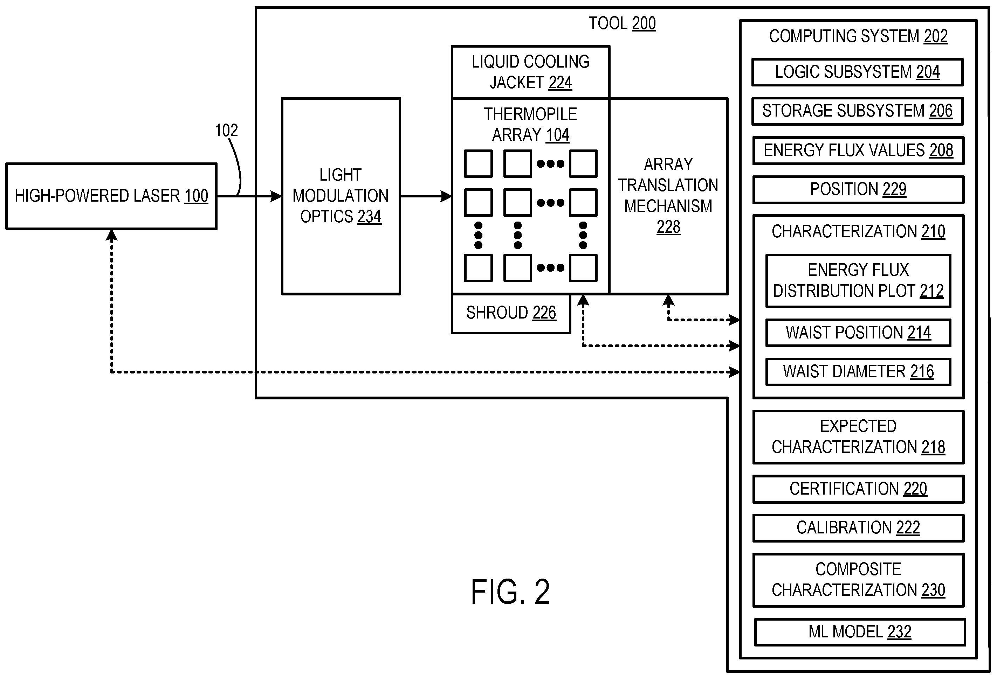

FIG. 1 shows an example high-powered laser 100 emitting laser light 102 incident on an array of thermopiles 104 of an example tool 200 (shown in FIG. 2) that is configured to determine characteristics of the laser light 102.

In the illustrated embodiment, the high-powered laser 100 is mounted on a tripod that allows for the high-powered laser 100 to be moved to different positions for different applications. During testing, the high-powered laser 100 can be setup a known distance from the array of thermopiles 104 in order to determine spatial characteristics of the laser light 102 emitted by the high-powered laser 100. For example, the high-powered laser 100 may be positioned tens to hundreds of meters from the array of thermopiles 104 for testing, depending on the embodiment. The high-powered laser 100 is configured to emit the laser light 102, which can have an photon energy per unit time in the range of kilowatts (kW), megawatts (MW), or higher depending on the embodiment and/or the application of the high-powered laser 100.

In other embodiments, the high-powered laser 100 may take another form. In one example, the high-powered laser 100 can be mounted on a vehicle (e.g., a truck, an aircraft, a sea vessel, a spacecraft) in some embodiments. In another example, the high-powered laser 100 can be positioned at a fixed location (e.g., in a factory or a laboratory), and the array of thermopiles 104 may be positioned to receive the laser light 102 emitted by the high-powered laser 100 at a known distance from the fixed position of the high-powered laser 100.

The array of thermopiles 102 is configured to receive the laser light 102 emitted by the high-powered laser 100. Each thermopile of the array of thermopiles 104 has a fixed spatial location relative to each other thermopile within the array of thermopiles 104. In the illustrated embodiment, each thermopile of the array of thermopiles 104 has a hexagonal light-input surface 106. The hexagonal shape of the light-input surface 106 of the thermopiles allows for the thermopiles of the array to seamlessly interface with each other with minimal or no gaps between thermopiles. Such an arrangement allows for increased characterization accuracy of the laser light 102 relative to other arrangements of thermopiles having different shaped light-input surfaces that require spacing between thermopiles. It will be appreciated that the light-input surface 106 of the thermopiles of the array of thermopiles 104 may have any suitable shape. For example, the light-input surfaces 106 of the thermopiles of the array of thermopiles 104 may be square, circular, or another shape, in other embodiments. Furthermore, the thermopiles in the array of thermopiles may be arranged in any suitable pattern. In some embodiments, the pattern may depend on the shape of the light-input surface 106 of the thermopiles. In the illustrated embodiment, the thermopiles are arranged in rows and columns that are offset to accommodate the hexagonal shape of the thermopiles. In other embodiments, the thermopiles of the array of thermopiles 104 may be arranged in a grid or some other pattern.

Each thermopile of the array of thermopiles 104 may have a suitable size for the particular testing application and the type of laser being tested. In the illustrated example, the diameter of the light-input surface 106 of each thermopile may be 10-20 centimeters. In other embodiments, the diameter of the light-input surface 106 of each thermopile may be larger than that range. In still other embodiments, the diameter of the light-input surface 106 of each thermopile may be smaller than that range.

Each thermopile of the array of thermopiles 104 comprises different materials forming two or more junctions. These materials have dissimilar thermoelectric properties, (e.g., different metals or semiconductor materials). The different materials are configured to withstand the photon energy per unit time of the laser light 102 incident on the thermopile without degradation of the thermopile. For example, the photon energy per unit time of the laser light 102 may be in the range of kilowatts (kW), megawatts (MW), or higher. Each thermopile of the array of thermopiles 104 is configured to measure a temperature gradient generated based at least on the laser light 102 incident on the thermopile and the temperature difference across the two or more junctions of different materials. Each thermopile is configured to generate an output signal (e.g., a voltage) indicating an energy flux value of the laser light 102 that is proportional to the temperature gradient. The output signal is also referred to herein as "a measurement of energy flux value" or just "an energy flux value." The voltage generated across each thermopile is a result of the Seebeck effect. The Seebeck effect is the phenomenon where a temperature difference between two dissimilar materials induces an electromotive force (e.g., an electromagnetic field (EMF) or voltage) across junctions within the thermopile.

The array of thermopiles 104 is operatively coupled to a computing system 202 of the tool 200 (shown in FIG. 2). The computing system 202 is configured to receive a set of energy flux values from the array of thermopiles 104 based at least on the laser light 102 emitted by the high-powered laser 100 being incident on the array of thermopiles 104. The computing system 202 is configured to output a characterization 210 of the laser light 102 emitted by the high-powered laser 100 based at least on the set energy flux values received from the array of thermopiles 104. The characterization 210 provides information about characteristics of the laser light 102 that is spatially registered to the array of thermopiles 104.

In some embodiments, the computing system 202 is configured to output a certification 220 that the high-powered laser 100 is functioning properly based at least on the characterization 220 of the laser light 102 emitted from the high-powered laser 100 correlating to an expected characterization 210 of the laser light 102. Conversely, in some embodiments, the computing system 202 is configured to output a calibration 222 for the high-powered laser 100 based at least on a difference between the characterization 210 of the laser light 102 emitted from the high-powered laser 100 and an expected characterization 218 of the laser light 102. The calibration 222 indicates an adjustment of one or more parameters of the high-powered laser 100 that would cause the characterization 210 to correlate with the expected characterization 218.

The high-powered laser 100 and the array of thermopiles 104 of FIG. 1 are provided as one example testing configuration. In other embodiments, the high-powered laser 100 and/or the array of thermopiles 104 may take another form without departing from the scope of the present disclosure. Although the array of thermopiles 104 is discussed in the context of being used to determine characteristics of laser light emitted by a high-powered laser, in some embodiments, the array of thermopiles 104 may be used to test laser having lower power levels. Further, in some embodiments, a size of each of the thermopiles of the array of thermopiles 104 may be appropriately sized to test a lower powered laser having a smaller laser beam size than that of a high-powered laser.

FIG. 2 schematically shows the tool 200 for characterizing laser light emitted by the high-powered laser 100. The tool 200 comprises the array of thermopiles 104. The array of thermopiles 104 is configured to receive the laser light 102 emitted from the high-powered laser 100. Each thermopile of the array of thermopiles 104 has a fixed spatial location relative to each other thermopile within the array of thermopiles 104. Each thermopile is configured to output an energy flux value of the laser light 102 incident on the thermopile. The array of thermopiles 104 is connected to the computing system 202.

The computing system 202 comprises a logic subsystem 204 and a storage subsystem 206 holding instructions executable by the logic subsystem 204 to execute computing operations to characterize one or more parameters of the laser light 102 emitted by the high-powered laser 100 and certify and/or calibrate the high-powered laser 100 based at least on the characterization of the laser light 102. In one example, the storage subsystem 206 holds instructions executable by the logic subsystem 204 to receive a set of energy flux values 208 from the array of thermopiles 104 based at least on the laser light 102 emitted by the high-powered laser 100 being incident on the array of thermopiles 104.

The computing system 202 is configured to process the set of energy flux values 206 to characterize the laser light 102 emitted from the high-powered laser 100. In particular, the storage subsystem 206 holds instructions executable by the logic subsystem 204 to output a characterization 210 of the laser light emitted by the high-powered laser based at least on the set energy flux values received from the array of thermopiles. The characterization 210 may include different parameters and/or other information that characterizes the laser light 102 depending on the embodiment. In some embodiments, the characterization 210 includes an energy flux distribution plot of energy flux values 208 of the laser light 102 that is spatially registered to the array of thermopiles 104.

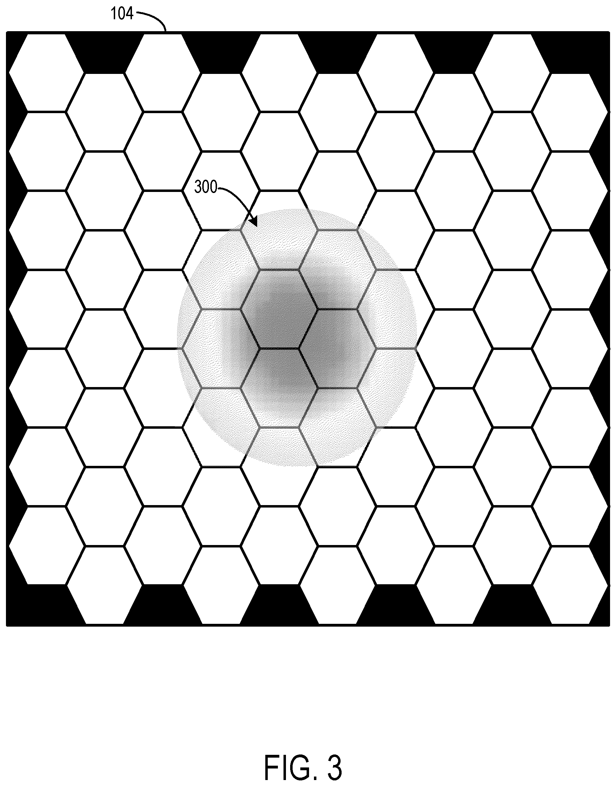

FIG. 3 shows an example two-dimensional energy flux distribution plot of energy flux values 300 that is output by the computing system 202 based on the laser light 102 incident on the array of thermopiles 104. The two-dimensional energy flux distribution plot of energy flux values 300 is shown overlaid on the array of thermopiles 104 where the laser light 102 is incident on the array of thermopiles 104, such that the two-dimensional energy flux distribution plot of energy flux values 300 is spatially registered to the array of thermopiles 104. In this example, the variance in the magnitude of the energy flux values corresponds to different shades of a greyscale in the two-dimensional energy flux distribution plot of energy flux values 300. The greater magnitudes of energy flux values correspond to darker shades of the greyscale and lesser magnitudes of energy flux values correspond to lighter shades of the greyscale. The two-dimensional energy flux distribution plot of energy flux values 300 shows how the energy flux of the laser light (or laser beam) 102 varies across its profile. The two-dimensional energy flux distribution plot of energy flux values 300 can provide information on the beam shape, size, and uniformity. Furthermore, multiple two-dimensional energy flux distribution plots of energy flux values measured from different known positions can be used to characterize a beam diameter, beam waist parameters (e.g., diameter, position), beam divergence, and power density, among other parameters of the laser light 102.

Returning to FIG. 2, in some embodiments, the characterization 210 includes a position 214 of a waist of the laser light 102 that is spatially registered to the array of thermopiles 104. In some examples, the position 214 of the waist of the laser light 102 can be defined by X, Y coordinates corresponding to pixels of the array of thermopiles 104. In some examples, the position 214 of the waist of the laser light 102 can be defined by a bounding box of X, Y coordinates. In some embodiments, the characterization 210 includes a diameter 216 of the waist of the laser light 102. Note that parameters related to the waist can be obtained via multiple energy flux distribution plots measure from different known locations. In other embodiments, the characterization 210 may include other parameter values that indicate characteristics of the laser light 102.

In some embodiments, the tool 200 is configured to perform certification and/or calibration operations for the high-powered laser 100 based at least on the characterization 210 of the laser light 102 emitted by the high-powered laser 100. In some embodiments, the storage subsystem 206 holds instructions executable by the logic subsystem 204 to output the certification 220 indicating that the high-powered laser 100 is functioning properly based at least on the characterization 210 of the laser light 102 emitted from the high-powered laser 100 correlating to an expected characterization 218 of the laser light 102. The certification 220 indicates that the high-powered laser 100 is functioning as desired for the particular application. The expected characterization 220 can include different parameters depending on the embodiment. In some examples, the expected characterization 220 may include an expected energy flux value distribution, an expected waist position, an expected waist diameter, or another expected parameter value of the laser light 102. The expected characterization 218 can be generated in any suitable manner. In one example, the expected characterization 218 can be generated based at least on settings of the high-powered laser 100. In another example, the expected characterization 218 can be generated based at least on a factory specification for the high-powered laser 100 provided by a manufacturer of the high-powered laser 100.

In some embodiments, the characterization 210 correlates to the expected correlation 218, if two parameter values match each other. For example, the distance between high-powered laser and array of thermopiles can be changed or the focusing optics can be adjusted by a known amount to measure the beam energy flux distribution at different locations along the laser beam propagation path and compared to expected values for those locations. Furthermore, if a measured waist diameter of the laser light 102 is determined from multiple energy flux distributions obtained a different known locations matches an expected waist diameter of the laser light 102, then the values are correlated indicating that the high-powered laser 100 is certified as functioning as desired for the particular application. As another example, if a measured waist position of the laser light 102 matches an expected waist position of the laser light 102, then the values are correlated and the high-powered laser 100 is certified.

In other embodiments, the characterization 210 correlates to the expected correlation 218, if a parameter value of the characterization is within a difference tolerance/threshold (e.g., <1% difference or 1-2 units of parameter value difference) of each other. For example, if a difference threshold for a waist diameter is 3 centimeters and a measured waist diameter of the laser light 102 is within 1-2 centimeters of an expected waist diameter of the laser light 102, then the values are correlated because the measured and expected waist diameters are within the difference threshold of each other. Such correlation indicates that the high-powered laser 100 is certified as functioning as desired for the particular application. Any suitable difference tolerance/threshold may be used to certify whether or not the high-powered laser 100 is functioning as desired for the particular application.

In some embodiments, the storage subsystem 206 holds instructions executable by the logic subsystem 204 to output the certification 220 based at least on a plurality of parameter values of the characterization 210 matching (exactly or within a difference threshold) a plurality of expected parameter values of the expected characterization 218.

In some embodiments, the storage subsystem 206 holds instructions executable by the logic subsystem 204 to output a calibration 222 for the high-powered laser 100 based at least on a difference between the characterization 210 of the laser light 102 emitted from the high-powered laser 100 and the expected characterization 218 of the laser light 102. Such a difference may occur between one or more parameters of the characterization 210 and the expected characterization 218, such as differences in energy flux values, waist position, waist diameter, or another parameter. Such differences may occur when such parameter values do not exactly match or are not within a difference threshold, depending on the embodiment. The calibration 222 indicates an adjustment of one or more parameters of the high-powered laser 100 that would cause the measured characterization 210 to correlate with the expected characterization 218. Example parameters of the high-powered laser 100 that can be adjusted based at least on the calibration 222 include output power / photon energy per unit time, wavelength, beam size and shape, beam alignment, focus, and modulation, among other parameters.

In some embodiments, the storage subsystem 206 holds instructions executable by the logic subsystem 204 to send the calibration 222 to the array of thermopiles 104, so that the one or more parameters of the high-powered laser 100 can be adjusted on-board the array of thermopiles 104 according to the calibration 222. Once the one or more parameters of the high-powered laser 100 are adjusted, the high-powered laser 100 can be re-tested by emitting laser light onto the thermopile array 104. Further, the tool 200 can certify that the high-powered laser 100 is functioning as desired or calibrated further as needed.

In some embodiments, the tool 200 may include optional components that help increase the functionality of the tool 200, which is balanced relative to the addition cost of the components. In some embodiments, the tool 200 includes a liquid cooling jacket 224 that is configured to dissipate heat from the array of thermopiles 104 to maintain the operating temperature of the array of thermopiles 104 within suitable limits. The liquid cooling jacket 224 may be arranged to interface with the array other thermopiles 104. In some examples, the liquid cooling jacket 224 may be arranged along a perimeter of the array of thermopiles 104. In some examples, the liquid cooling jacket 224 may be arranged to interface with the back side of the array of thermopiles that opposes the light-input surface 106 of the thermopiles. In some examples, the liquid cooling jacket 224 may be interlaced between individual thermopiles of the array of thermopiles 224.

In one example, the liquid cooling jacket 224 comprises a material that has high thermal conductivity, such as aluminum or copper. The liquid cooling jacket 224 is hollow and contains channels or passages through which a coolant, often water or a water-glycol mixture, flows. The liquid cooling jacket 224 may include a pump (not shown) to pump the coolant through the channels. As the coolant flows through the channels, the material of the liquid cooling jacket 224 absorbs heat from the array of thermopiles. This heat transfer occurs due to the temperature difference between the array of thermopiles 104 and the coolant, as well as the thermal conductivity of the material of the liquid cooling jacket 224. The heated coolant flows through the liquid cooling jacket 224 away from the array of thermopiles 104 to a heat exchanger or heat exchange interface (not shown), where the heated coolant exchanges thermal energy with a secondary cooling system, such as a radiator. In some examples, the heat exchanger or heat exchange interface may use air or another fluid to dissipate the heat from the coolant.

By employing the liquid cooling jacket 224 in the tool 200, the temperature of the array of thermopiles 104 can be controlled to a degree during testing if desired using the liquid cooling jacket 224. Further, the liquid cooling jacket 224 can be used to cool the array of thermopiles 104 subsequent to testing in order to help prevent the thermopiles of the array of thermopiles 104 from degrading. Moreover, in some examples, the cooling provided by the liquid cooling jacket 224 may extend an upper range of photon energy per unit time of laser light that can be received by the array of thermopiles 104 without causing degradation of the thermopiles.

In some embodiments, the computing system 202 is configured to output the characterization 210 based at least on an amount of cooling provided by the liquid cooling jacket 224 in order to accurately characterize parameters of the laser light 102. For example, the computing system may be configured to apply an offset to account for a variation in photon energy per unit time measured by the thermopiles based on an amount of cooling provided by the liquid cooling jacket 224.

In some embodiments, the tool 200 includes a shroud 226 that is configured to reduce an amount of ambient light (or other light from external sources) that is incident on the array of thermopiles 104. Excess ambient light can influence the energy flux measured by the array of thermopiles 104 and reduce the accuracy of the characterization 210 of the laser light 102. By using the shroud 226 to reduce the amount of ambient light that is incident on the array of thermopiles 104, the accuracy of the characterization 210 of the laser light 102 can be increased. Moreover, the shroud 226 can act as a physical barrier to contain the laser beam 102 and restrict its propagation outside the designated testing area of the array of thermopiles 104.

In some embodiments, the tool 200 includes an array translation mechanism 228 that is configured to change a position 229 of the thermopile array 104 by a known amount. The array translation mechanism 228 may take any suitable form. In one example, the array translation mechanism 228 includes an X-Y table that is operatively coupled to the array of thermopiles 104. The X-Y table is configured to translate the array of thermopiles 104 to change the position 229 of the array of thermopiles 104. The X-Y table is configured to translate the array of thermopiles 104 in up to two dimensions. In another example, the array translation mechanism 228 is configured to move the array of thermopiles 104 in three dimensions to change the position 229 of the array of thermopiles 104.

In some embodiments, the array translation mechanism 228 can be used during testing of the high-powered laser 100 to artificially increase a resolution of the characterization 218 for the high-powered laser 100 by performing multiple measurements of the energy flux of the laser light 102 while the array of thermopiles 104 assumes different known positions 229. The computing system 202 is configured to process multiple measurements of energy flux output by the array of thermopiles 104 from the different positions 229 to generate a composite characterization 230 that can have an increased resolution relative to the single characterization 210. In one example, the storage subsystem holds 206 instructions executable by the logic subsystem 204 to send one or more control signals to the array translation mechanism 228 to set the array of thermopiles 104 at a first known position. The high-powered laser 100 emits the laser light 102 incident on the array of thermopiles 104. The array of thermopiles 104 outputs a first set of energy flux values based at least on the incident laser light 102 while the array of thermopiles 104 is at the first position. The storage subsystem holds 206 instructions executable by the logic subsystem 204 to receive the first set of energy flux values from the array of thermopiles 104.

Furthermore, the storage subsystem holds 206 instructions executable by the logic subsystem 204 to send one or more control signals to the array translation mechanism 228 to translate the array of thermopiles 104 from the first position to a second position. The high-powered laser 100 emits the laser light 102 incident on the array of thermopiles 104. The array of thermopiles 104 outputs a second set of energy flux values based at least on the incident laser light 102 while the array of thermopiles 104 is at the second position. The storage subsystem holds 206 instructions executable by the logic subsystem 204 to receive a second set of energy flux values from the array of thermopiles 102 based at least on the incident laser light 102 while the array of thermopiles 104 is at the second position.

The storage subsystem holds 206 instructions executable by the logic subsystem 204 to output a composite characterization 230 of the laser light 102 emitted by the high-powered laser 100 based at least on the first set of energy flux values, the second set of energy flux values, and a difference between the first position and the second position. The composite characterization 230 has a higher resolution than the characterization 210 generated from the single measurement of energy flux values output by the array of thermopiles 104. By shifting the position 229 of the array of thermopiles 104 and taking multiple measurements, it is possible to gather more information about the laser light 102 and enhance the resolution of the composite characterization 230. The computing system 202 may employ any suitable technique to generate the composite characterization 230. In one example, the composite characterization 230 includes a composite energy flux distribution plot, a waist position, a waist diameter, or another parameter of the laser light 102 that have higher-resolution values than a characterization generated from a single set of energy flux values.

In some embodiments, computing system 202 employs super-resolution techniques to artificially increase the resolution of the composite characterization 230. These techniques exploit redundancy across multiple set of energy flux values / energy flux distribution plots / images to enhance resolution. In some examples, multiple sets of energy flux values can be aligned using the common reference frame of the position of the array of thermopiles 104 and then combine them to form a higher-resolution output in the form of the composite characterization 230. Techniques such as image registration, optical flow estimation, and motion compensation can be used to perform such alignment accurately.

In some embodiments, the computing system 202 employs machine learning to generate the composite characterization 230. In one example, a machine learning model 232 can be trained to take multiple sets of energy flux values and corresponding positions of the array of thermopiles 104 as input and output the composite characterization 230. The storage system 204 holds instructions executable by the logic subsystem 206 to execute the trained machine learning model 232 to receive multiple sets of energy flux values and corresponding positions of the array of thermopiles 104 as input and generate the composite characterization 230. In one example, the machine learning model is a convolutional neural network (CNN), which is suitable to learn complex mappings between different sets of energy flux values.

FIGS. 3-5 show example energy flux distribution plots of energy flux values measured by the array of thermopiles 104 from different positions. The different energy flux distribution plots / corresponding sets of energy flux values can be collectively used to generate the composite characterization 230 of the laser light 102 emitted by the high-powered laser 100. In FIG. 3, a first energy flux distribution plot 300 of the laser light 102 is spatially registered to the array of thermopiles 104 at a first position.

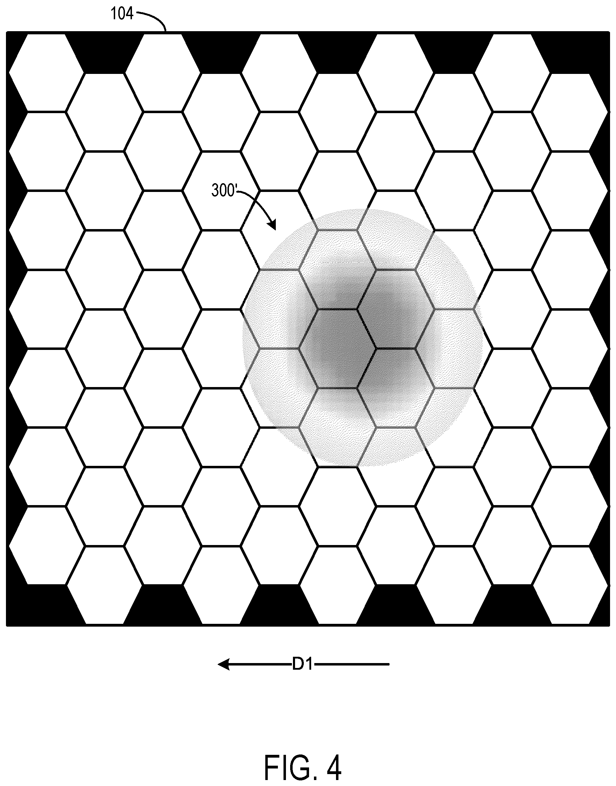

In FIG. 4, the array of thermopiles is shifted via the array translation mechanism 228 to a second position that is a first known distance (D1) from the first position. A second energy flux distribution plot 300' of the laser light 102 is spatially registered to the array of thermopiles 104 at the second position, which is shifted to the right relative to the first position.

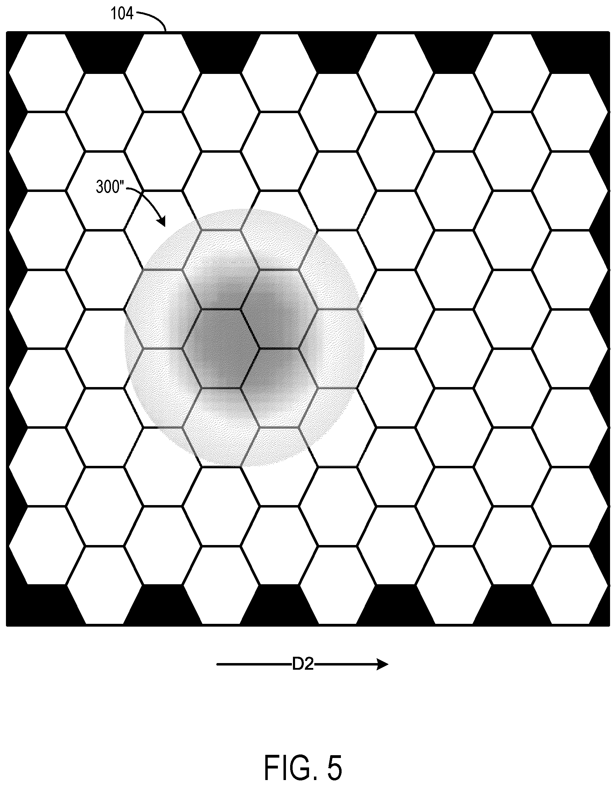

In FIG. 5, the array of thermopiles is shifted via the array translation mechanism 228 to a third position that is a second known distance (D2) from the first position. A third energy flux distribution plot 300" of the laser light 102 is spatially registered to the array of thermopiles 104 at the third position, which is shifted to the left relative to the first position.

The computing system 202 can generate the composite characterization 230 including a composite energy flux distribution plot based at least on the three illustrated energy flux distribution plots 300, 300', 300" shown in FIGS. 3-5, which are spatially registered to the three known positions of the thermopile array 104. The composite energy flux distribution plot has a higher resolution than any of the three individual energy flux distribution plots. In this way, the computing system 202 can artificially generate a high-resolution composite characterization 230 of the laser light 102.

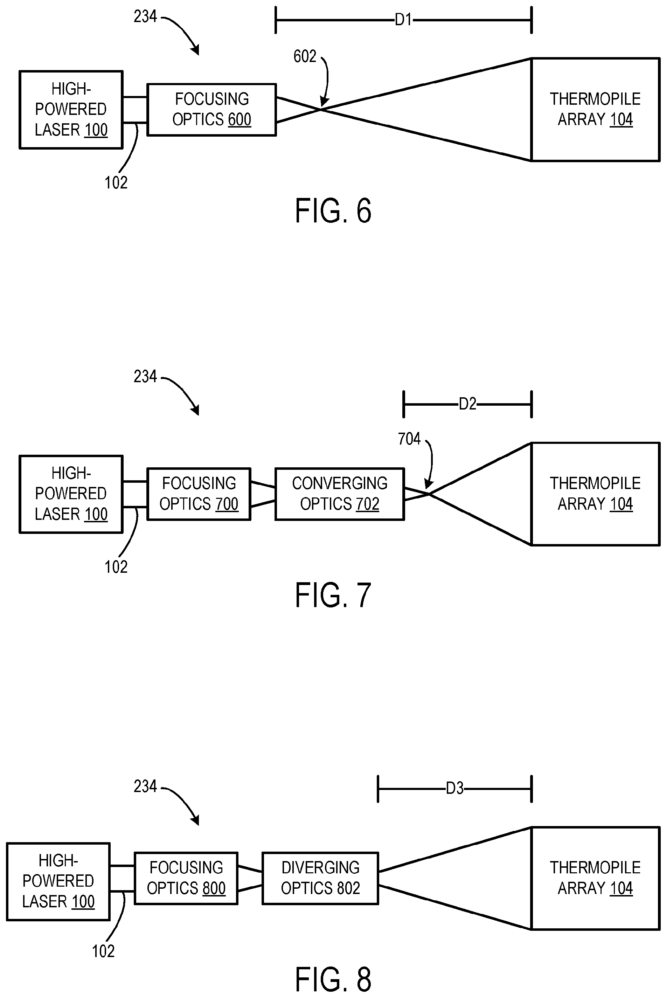

In some embodiments, the tool 200 may include light modulation optics 234 that are positioned intermediate the high-powered laser 100 and the array of thermopiles 104. The light modulation optics 234 are configured to increase a size of a beam of the laser light 102 emitted by the high-powered laser 100 that is incident on the array of thermopiles 104. Depending on various optical factors, the light modulation optics 234 may take various forms. More particularly, such optical factors may include the native focusing optics of the high-powered laser 100, photon energy per unit time of the high-powered laser 100, and an operational distance available to space apart the high-powered laser 100 and the array of thermopiles 104, among other factors. FIGS. 6-8 show example optical configurations of the light modulation optics 234 that may be employed in the tool of FIG. 2, in different embodiments.

In some embodiments, as shown in FIG. 6, the light modulation optics 234 include focusing optics 600 positioned intermediate the high-powered laser 100 and the thermopile array 104. The focusing optics 600 are configured to receive the laser light 102 emitted from the high-powered laser 100 and focus the laser light at a focal point 602 that is short of the array of thermopiles 104. The laser light diverges from the focal point 602 to be incident on the array of thermopiles 104 with an increased size relative to the native beam size emitted by the high-powered laser 100. The focusing optics 600 may include lenses, curved mirrors, other optical elements, or a combination thereof that are configured to converge light to a focal point. The focusing optics 600 are spaced apart from the array of thermopiles 104 by a first separation distance (D1) in this embodiment.

In some embodiments, as shown in FIG. 7, the light modulation optics 234 include focusing optics 700 and converging optics 702 positioned in series intermediate the high-powered laser 100 and the thermopile array 104. The focusing optics 700 are configured to receive the laser light 102 emitted from the high-powered laser 100. The focusing optics 700 are configured to manipulate the direction and energy flux distribution of the laser light 102 to narrow the laser beam received by the converging optics 702 relative to the native laser beam emitted by the high-powered laser 100. The converging optics 702 are configured to receive the narrowed laser beam emitted by the focusing optics 700 and focus the laser light at a focal point 704 that is short of the array of thermopiles 104. The laser light 102 diverges from the focal point 602 to be incident on the array of thermopiles 104 with an increased size relative to the native beam size emitted by the high-powered laser 100. In the illustrated embodiment, the light modulation optics 234 including the focusing optics 700 and the converging optics 702 allow for a second separation distance (D2) between the converging optics 702 and the array of thermopiles 104. The second separation distance (D2) is less than the first separation distance (D1) shown in FIG. 6. Accordingly, the light modulation optics 234 of the embodiment shown in FIG. 7 may be suitable for scenarios where there is less available space to separate the high-powered laser 100 from the array of thermopiles 104 than the embodiment shown in FIG. 6.

In some embodiments, as shown in FIG. 8, the light modulation optics 234 include focusing optics 800 and diverging optics 802 positioned in series intermediate the high-powered laser 100 and the thermopile array 104. The focusing optics 800 are configured to receive the laser light 102 emitted from the high-powered laser 100. The focusing optics 800 are configured to manipulate the direction and energy flux distribution of the laser light 102 to narrow the laser beam received by the diverging optics 802 relative to the native laser beam emitted by the high-powered laser 100. The diverging optics 802 are configured to receive the narrowed laser beam emitted by the focusing optics 800 and diverge the laser light at a rate of divergence that allows for the laser beam to be incident on the array of thermopiles 104 with an increased size relative to the native beam size emitted by the high-powered laser 100. In the illustrated embodiment, the light modulation optics 234 including the focusing optics 800 and the diverging optics 802 allow for a third separation distance (D3) between the diverging optics 802 and the array of thermopiles 104. The third separation distance (D3) is less than the first separation distance (D1) shown in FIG. 6 and greater than the second separation distance (D2) shown in FIG. 7. Accordingly, the light modulation optics 234 of the embodiment shown in FIG. 8 may be suitable for scenarios where there is less available space to separate the high-powered laser 100 from the array of thermopiles 104 than the embodiment shown in FIG. 6 and more available space than the embodiment shown in FIG. 7.

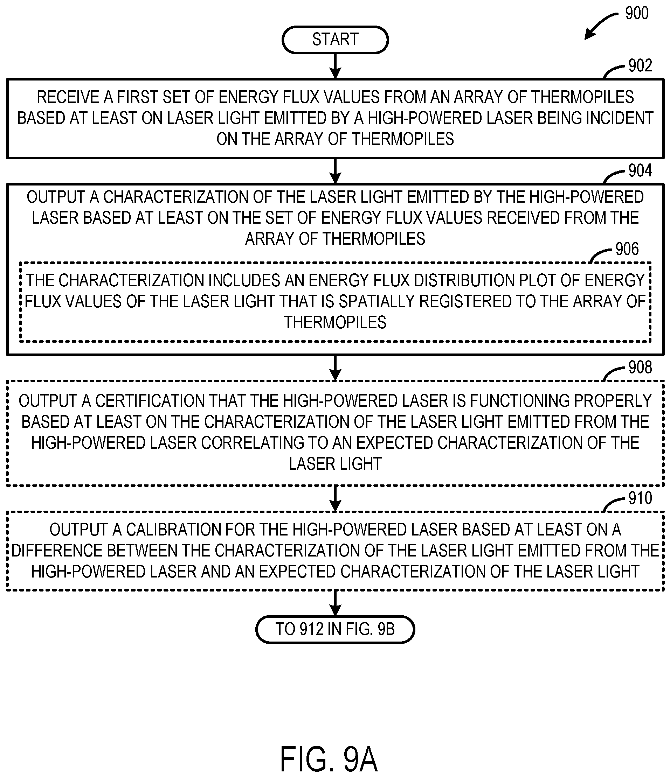

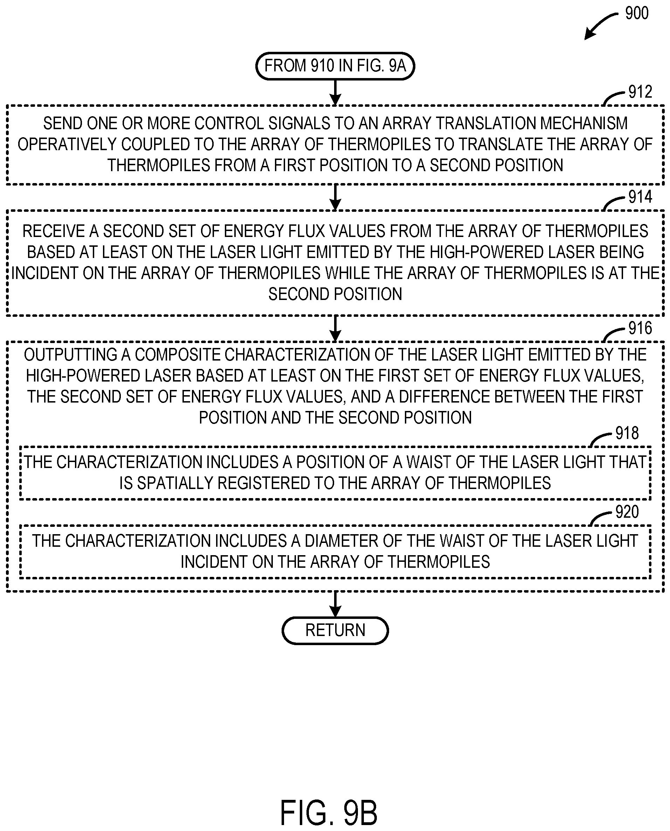

### FIGS. 9A/B - method

FIGS. 9A-9B show an example computer-implemented method 900 for characterizing laser light emitted by a high-powered laser. For example, the computer-implemented method 900 may be performed by the tool 200, and more particularly, the computing system 202 of the tool 200. Note that method steps indicated by dashed boxes may be optional in some embodiments.

At 902, the computer-implemented method 900 includes receiving a set of energy flux values from an array of thermopiles based at least on laser light emitted by a high-powered laser being incident on the array of thermopiles. Each thermopile of the array of thermopiles has a fixed spatial location relative to each other thermopile within the array of thermopiles.

At 904, the computer-implemented method 900 includes outputting a characterization of the laser light emitted by the high-powered laser based at least on the set energy flux values received from the array of thermopiles. In some embodiments, at 906, the characterization may include an energy flux distribution plot of energy flux values of the laser light that is spatially registered to the array of thermopiles.

In some embodiments, at 908, the computer-implemented method 900 may include outputting a certification that the high-powered laser is functioning properly based at least on the characterization of the laser light emitted from the high-powered laser correlating to an expected characterization of the laser light.

In some embodiments, at 910, the computer-implemented method 900 may include outputting a calibration for the high-powered laser based at least on a difference between the characterization of the laser light emitted from the high-powered laser and an expected characterization of the laser light. The calibration indicates an adjustment of one or more parameters of the high-powered laser.

In FIG. 9B, in some embodiments, at 912, the computer-implemented method 900 may include sending one or more control signals to an array translation mechanism operatively coupled to the array of thermopiles to translate the array of thermopiles from the first position to a second position.

In some embodiments, at 914, the computer-implemented method 900 may include receiving a second set of energy flux values from the array of thermopiles based at least on the laser light emitted by the high-powered laser being incident on the array of thermopiles while the array of thermopiles is at the second position.

In some embodiments, at 916, the computer-implemented method 900 may include outputting a composite characterization of the laser light emitted by the high-powered laser based at least on the first set of energy flux values, the second set of energy flux values, and a difference between the first position and the second position. The composite characterization has a higher resolution than the first characterization.

In some embodiments, at 918, the composite characterization may include a position of a waist of the laser light that is spatially registered to the array of thermopiles. The position of the waist of the laser light can be determined from the multiple energy flux distribution plots measured at the different known positions along the beam propagation path. In some embodiments, at 920, the composite characterization may include a diameter of the waist of the laser light that is incident on the array of thermopiles. The diameter of the waist of the laser light can be determined from the multiple energy flux distribution plots measured at the different known positions along the beam propagation path.

The computer-implemented method 900 may be performed to characterize laser light emitted by a high-powered laser. In particular, by employing the array of thermopiles to characterize laser light emitted by a high-powered laser, the thermopiles have a suitably high enough destruction tolerance to withstand incident laser light without degradation while still providing accurate characterization of the laser light. In contrast, other conventional devices, such as beam profilers or other optical sensor-based devices, would suffer degradation from incident laser light from the high-powered laser and would be unable to provide such a characterization of the laser light.

Furthermore, by employing an entire array of thermopiles that have a fixed spatial location relative to one another within the array, the array of thermopiles can collectively provide a spatial characterization of the laser light, such as an energy flux distribution across a laser beam incident on the array of thermopiles. Conventional beam profilers or similar devices are incapable of providing such a spatial characterization of the laser light emitted from a high-powered laser.

Furthermore, in some embodiments, the computer-implemented method 900 may be performed to provide certification and/or calibration functionality for the high-powered laser. Such certification and/or calibration of a higher-powered laser according to the disclosed approach using an array of thermopiles may be more accurate than conventional approaches.

The methods and processes described herein may be tied to a computing system of one or more computing devices. In particular, such methods and processes may be implemented as an executable computer-application program, a network-accessible computing service, an application-programming interface (API), a library, or a combination of the above and/or other compute resources.

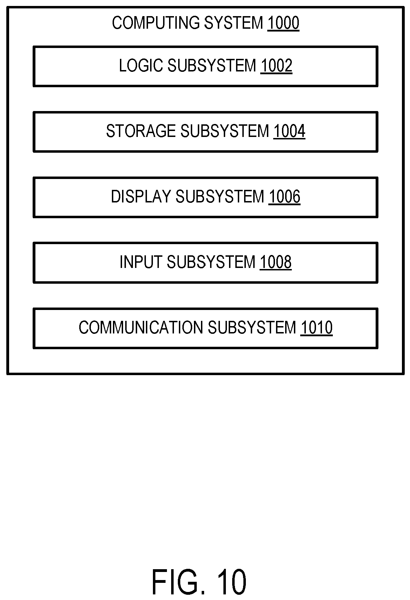

### FIG. 10 - computer

FIG. 10 schematically shows a simplified representation of a computing system 1000 configured to provide any to all of the compute functionality described herein. Computing system 1000 may take the form of one or more personal computers, network-accessible server computers, tablet computers, home-entertainment computers, gaming devices, mobile computing devices, mobile communication devices (e.g., smart phone), virtual/augmented/mixed reality computing devices, wearable computing devices, Internet of Things (IoT) devices, embedded computing devices, and/or other computing devices. For example, the computing system 1000 may be representative of the computing system 202 of FIG. 2.

Computing system 1000 includes a logic subsystem 1002 and a storage subsystem 1004. Computing system 1000 may optionally include a display subsystem 1006, input subsystem 1008, communication subsystem 1010, and/or other subsystems not shown in FIG. 10.

Logic subsystem 1002 includes one or more physical devices configured to execute instructions. For example, the logic subsystem may be configured to execute instructions that are part of one or more applications, services, or other logical constructs. The logic subsystem may include one or more hardware processors configured to execute software instructions. Additionally, or alternatively, the logic subsystem may include one or more hardware or firmware devices configured to execute hardware or firmware instructions. Processors of the logic subsystem may be single-core or multi-core, and the instructions executed thereon may be configured for sequential, parallel, and/or distributed processing. Individual components of the logic subsystem optionally may be distributed among two or more separate devices, which may be remotely located and/or configured for coordinated processing. Aspects of the logic subsystem may be virtualized and executed by remotely-accessible, networked computing devices configured in a cloud-computing configuration.

Storage subsystem 1004 includes one or more physical devices configured to temporarily and/or permanently hold computer information such as data and instructions executable by the logic subsystem. When the storage subsystem includes two or more devices, the devices may be collocated and/or remotely located. Storage subsystem 1004 may include volatile, nonvolatile, dynamic, static, read/write, read-only, random-access, sequential-access, location-addressable, file-addressable, and/or content-addressable devices. Storage subsystem 1004 may include removable and/or built-in devices. When the logic subsystem executes instructions, the state of storage subsystem 1004 may be transformed - e.g., to hold different data.

Aspects of logic subsystem 1002 and storage subsystem 1004 may be integrated together into one or more hardware-logic components. Such hardware-logic components may include program- and application-specific integrated circuits (PASIC / ASICs), program- and application-specific standard products (PSSP / ASSPs), system-on-a-chip (SOC), and complex programmable logic devices (CPLDs), for example.

The logic subsystem and the storage subsystem may cooperate to instantiate one or more logic machines. As used herein, the term "machine" is used to collectively refer to the combination of hardware, firmware, software, instructions, and/or any other components cooperating to provide computer functionality. In other words, "machines" are never abstract ideas and always have a tangible form. A machine may be instantiated by a single computing device, or a machine may include two or more sub-components instantiated by two or more different computing devices. In some implementations a machine includes a local component (e.g., software application executed by a computer processor) cooperating with a remote component (e.g., cloud computing service provided by a network of server computers). The software and/or other instructions that give a particular machine its functionality may optionally be saved as one or more unexecuted modules on one or more suitable storage devices.

When included, display subsystem 1006 may be used to present a visual representation of data held by storage subsystem 1004. This visual representation may take the form of a graphical user interface (GUI). Display subsystem 1006 may include one or more display devices utilizing virtually any type of technology. In some implementations, display subsystem may include one or more virtual-, augmented-, or mixed reality displays.

When included, input subsystem 1008 may comprise or interface with one or more input devices. An input device may include a sensor device or a user input device. Examples of user input devices include a keyboard, mouse, touch screen, or game controller. In some embodiments, the input subsystem may comprise or interface with selected natural user input (NUI) componentry. Such componentry may be integrated or peripheral, and the transduction and/or processing of input actions may be handled on- or off-board. Example NUI componentry may include a microphone for speech and/or voice recognition; an infrared, color, stereoscopic, and/or depth camera for machine vision and/or gesture recognition; a head tracker, eye tracker, accelerometer, and/or gyroscope for motion detection and/or intent recognition.

When included, communication subsystem 1010 may be configured to communicatively couple computing system 1000 with one or more other computing devices. Communication subsystem 1010 may include wired and/or wireless communication devices compatible with one or more different communication protocols. The communication subsystem may be configured for communication via personal-, local- and/or wide-area networks.

Further, the disclosure comprises without limitation, the following examples:
A tool comprising: an array of thermopiles configured to receive laser light emitted from a high-powered laser, wherein each thermopile has a fixed spatial location relative to each other thermopile within the array of thermopiles, and wherein each thermopile is configured to output an energy flux value of the laser light incident on the thermopile; and a computing system including a logic subsystem and a storage subsystem holding instructions executable by the logic subsystem to receive a set of energy flux values from the array of thermopiles based at least on the laser light emitted by the high-powered laser being incident on the array of thermopiles; and output a characterization of the laser light emitted by the high-powered laser based at least on the set of energy flux values received from the array of thermopiles.

In this example and/or other examples, the characterization may include an energy flux distribution plot of energy flux values of the laser light that is spatially registered to the array of thermopiles.

In this example and/or other examples, the storage subsystem may hold instructions executable by the logic subsystem to: output a certification that the high-powered laser is functioning properly based at least on the characterization of the laser light emitted from the high-powered laser correlating to an expected characterization of the laser light.

In this example and/or other examples, the storage subsystem may hold instructions executable by the logic subsystem to output a calibration for the high-powered laser based at least on a difference between the characterization of the laser light emitted from the high-powered laser and an expected characterization of the laser light, wherein the calibration indicates an adjustment of one or more parameters of the high-powered laser.

In this example and/or other examples, the set of energy flux values may be a first set of energy flux values output by the array of thermopiles while the array of thermopiles is at a first position, wherein the characterization of the laser light emitted by the high-powered laser is a first characterization, wherein the tool further comprises an array translation mechanism configured to translate the array of thermopiles in one or more directions, and wherein the storage subsystem holds instructions executable by the logic subsystem to: send one or more control signals to the array translation mechanism to translate the array of thermopiles from the first position to a second position; receive a second set of energy flux values from the array of thermopiles based at least on the laser light emitted by the high-powered laser being incident on the array of thermopiles while the array of thermopiles is at the second position; and output a composite characterization of the laser light emitted by the high-powered laser based at least on the first set of energy flux values, the second set of energy flux values, and a difference between the first position and the second position, wherein the composite characterization has a higher resolution than the first characterization.

In this example and/or other examples, the composite characterization may include one or more of a position of a waist of the laser light and a diameter of the waist of the laser light determined based at least on the first set of energy flux values measured at the first position and the second set of energy flux values measured at the second position.

In this example and/or other examples, the tool may further comprise light modulation optics positioned intermediate the high-powered laser and the array of thermopiles and configured to increase a size of a beam of the laser light emitted by the high-powered laser that is incident on the array of thermopiles.

In this example and/or other examples, the tool may further comprise a liquid cooling jacket operatively coupled with the array of thermopiles and configured to dissipate heat produced by the laser light that is incident on thermopiles of the array of thermopiles.

In this example and/or other examples, the tool may further comprise a shroud operatively coupled with the array of thermopiles and configured to block at least some ambient light from reaching the array of thermopiles.

In this example and/or other examples, each thermopile of the array of thermopiles may have a hexagonal light-input surface.

In another example, a computer-implemented method for characterizing laser light emitted from a high-powered laser is provided, the computer-implemented method comprising: receiving a set of energy flux values from an array of thermopiles based at least on laser light emitted by a high-powered laser being incident on the array of thermopiles, wherein each thermopile of the array of thermopiles has a fixed spatial location relative to each other thermopile within the array of thermopiles; and outputting a characterization of the laser light emitted by the high-powered laser based at least on the set energy flux values received from the array of thermopiles.

In this example and/or other examples, the characterization may include an energy flux distribution plot of energy flux values of the laser light that is spatially registered to the array of thermopiles.

In this example and/or other examples, the method may further comprise: outputting a certification that the high-powered laser is functioning properly based at least on the characterization of the laser light emitted from the high-powered laser correlating to an expected characterization of the laser light.

In this example and/or other examples, the method may further comprise outputting a calibration for the high-powered laser based at least on a difference between the characterization of the laser light emitted from the high-powered laser and an expected characterization of the laser light, wherein the calibration indicates an adjustment of one or more parameters of the high-powered laser.

In this example and/or other examples, the set of energy flux values may be a first set of energy flux values output by the array of thermopiles while the array of thermopiles is at a first position, wherein the characterization of the laser light emitted by the high-powered laser is a first characterization, and wherein the computer-implemented method further comprises: sending one or more control signals to an array translation mechanism operatively coupled to the array of thermopiles to translate the array of thermopiles from the first position to a second position; receiving a second set of energy flux values from the array of thermopiles based at least on the laser light emitted by the high-powered laser being incident on the array of thermopiles while the array of thermopiles is at the second position; and outputting a composite characterization of the laser light emitted by the high-powered laser based at least on the first set of energy flux values, the second set of energy flux values, and a difference between the first position and the second position, wherein the composite characterization has a higher resolution than the first characterization.

In this example and/or other examples, the composite characterization may include one or more of a position of a waist of the laser light and a diameter of the waist of the laser light determined based at least on the first set of energy flux values measured at the first position and the second set of energy flux values measured at the second position.

In yet another example, a tool comprises an array of thermopiles configured to receive laser light emitted from a high-powered laser, wherein each thermopile has a fixed spatial location relative within each other thermopile of the array of thermopiles, and wherein each thermopile is configured to output an energy flux value of the laser light incident on the thermopile; an array translation mechanism configured to translate the array of thermopiles in one or more directions; and a computing system including a logic subsystem and a storage subsystem holding instructions executable by the logic subsystem to: receive a first set of energy flux values from the array of thermopiles based at least on the laser light emitted by the high-powered laser being incident on the array of thermopiles while the array of thermopiles is at a first position; output a first characterization of the laser light emitted by the high-powered laser based at least on the first set energy flux values of received from the array of thermopiles while the array of thermopiles is at the first position; send one or more control signals to the array translation mechanism to translate the array of thermopiles from the first position to a second position; receive a second set of energy flux values from the array of thermopiles based at least on the laser light emitted by the high-powered laser being incident on the array of thermopiles while the array of thermopiles is at the second position; and output a composite characterization of the laser light emitted by the high-powered laser based at least on the first set of energy flux values, the second set of energy flux values, and a difference between the first position and the second position, wherein the composite characterization has a higher resolution than the first characterization.

In this example and/or other examples, the tool may further comprise light modulation optics positioned intermediate the high-powered laser and the array of thermopiles and configured to increase a size of a beam of the laser light emitted by the high-powered laser that is incident on the array of thermopiles.

In this example and/or other examples, the tool may further comprise a liquid cooling jacket operatively coupled with the array of thermopiles and configured to dissipate heat produced by the laser light that is incident on thermopiles of the array of thermopiles.

In this example and/or other examples, the tool may further comprise: a shroud operatively coupled with the array of thermopiles and configured to block at least some ambient light from reaching the array of thermopiles.

In another example, a computer readable storage system for characterizing laser light emitted from a high-powered laser may comprise programmed instructions which, when executed by a logic system, cause the characterization tool according to any of the examples described above to carry out the steps of the method of any of the examples described above.

This disclosure is presented by way of example and with reference to the associated drawing figures. Components, process steps, and other elements that may be substantially the same in one or more of the figures are identified coordinately and are described with minimal repetition. It will be noted, however, that elements identified coordinately may also differ to some degree. It will be further noted that some figures may be schematic and not drawn to scale. The various drawing scales, aspect ratios, and numbers of components shown in the figures may be purposely distorted to make certain features or relationships easier to see.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. A computer-implemented method for characterizing laser light (102) emitted from a high-powered laser (100), the computer-implemented method comprising:
receiving a set of energy flux values (208) from an array of thermopiles (104) based at least on laser light (102) emitted by a high-powered laser (100) being incident on the array of thermopiles (104), wherein each thermopile of the array of thermopiles (104) has a fixed spatial location relative to each other thermopile within the array of thermopiles (104); and
outputting a characterization (210) of the laser light (102) emitted by the high-powered laser (100) based at least on the set energy flux values (208) received from the array of thermopiles (104).

2. The computer-implemented method of claim 1, wherein the characterization (210) includes an energy flux distribution plot (300) of energy flux values of the laser light (102) that is spatially registered to the array of thermopiles (104).

3. The computer-implemented method of claim1 or 2, further comprising: outputting a certification (220) that the high-powered laser (100) is functioning properly based at least on the characterization (220) of the laser light (102) emitted from the high-powered laser (100) correlating to an expected characterization (218) of the laser light (102).

4. The computer-implemented method of any of claims 1 to 3, further comprising:
outputting a calibration (222) for the high-powered laser (100) based at least on a difference between the characterization (220) of the laser light (102) emitted from the high-powered laser (102) and an expected characterization (218) of the laser light (102),
wherein the calibration (222) indicates an adjustment of one or more parameters of the high-powered laser (100).

5. The computer-implemented method of any of claims 1 to 4, wherein the set of energy flux values (208) is a first set of energy flux values output by the array of thermopiles (104) while the array of thermopiles (104) is at a first position, wherein the characterization (210) of the laser light (102) emitted by the high-powered laser (100) is a first characterization, and wherein the computer-implemented method further comprises:
sending one or more control signals to an array translation mechanism (228) operatively coupled to the array of thermopiles (104) to translate the array of thermopiles (104) from the first position to a second position;
receiving a second set of energy flux values from the array of thermopiles (104) based at least on the laser light (102) emitted by the high-powered laser (100) being incident on the array of thermopiles (104) while the array of thermopiles is at the second position; and
outputting a composite characterization (230) of the laser light (102) emitted by the high-powered laser (100) based at least on the first set of energy flux values, the second set of energy flux values, and a difference between the first position and the second position, wherein the composite characterization (230) has a higher resolution than the first characterization (220).

6. The computer-implemented method of claim 5, wherein the composite characterization (230) includes one or more of a position (214) of a waist of the laser light (102) and a diameter (216) of the waist of the laser light (102) determined based at least on the first set of energy flux values measured at the first position and the second set of energy flux values measured at the second position.

7. A tool (200) comprising:
an array of thermopiles (104) configured to receive laser light (102) emitted from a high-powered laser (100), wherein each thermopile has a fixed spatial location relative to each other thermopile within the array of thermopiles (104), and wherein each thermopile is configured to output an energy flux value (208) of the laser light (102) incident on the thermopile; and
a computing system (202) configured to operate the method according to any of claims 1 to 6.

8. The tool (200) of claim 7, further comprising:
light modulation optics (234) positioned intermediate the high-powered laser (100) and the array of thermopiles (104) and configured to increase a size of a beam of the laser light (102) emitted by the high-powered laser (100) that is incident on the array of thermopiles (104).

9. The tool (200) of claim 7 or 8, further comprising:
a liquid cooling jacket (224) operatively coupled with the array of thermopiles (104) and configured to dissipate heat produced by the laser light (102) that is incident on thermopiles of the array of thermopiles (104).

10. The tool (200) of any of claims 7 to 9, further comprising:
a shroud (226) operatively coupled with the array of thermopiles (104) and configured to block at least some ambient light from reaching the array of thermopiles (104).

11. The tool (200) of any of claims 7 to 10, wherein each thermopile of the array of thermopiles (104) has a hexagonal light-input surface (106).

12. The tool (200) of any of claims 7 to 11, further comprising:
an array translation mechanism (228) configured to translate the array of thermopiles (104) in one or more directions.

13. The tool (200) of any of claims 7 to 12, further comprising:
light modulation optics (234) positioned intermediate the high-powered laser (100) and the array of thermopiles (104) and configured to increase a size of a beam of the laser light (102) emitted by the high-powered laser (100) that is incident on the array of thermopiles (104).

14. The tool (200) of any of claims 7 to 13, further comprising:
a liquid cooling jacket (224) operatively coupled with the array of thermopiles (104) and configured to dissipate heat produced by the laser light (102) that is incident on thermopiles of the array of thermopiles (104).

15. The tool (200) of any of claims 7 to 14, further comprising:
a shroud (226) operatively coupled with the array of thermopiles (104) and configured to block at least some ambient light from reaching the array of thermopiles (104).
